# EUROPEAN PATENT SPECIFICATION

(11) **EP 4 171 933 B1**
(45) Date of publication and mention of the grant of the patent: **17.06.2026**
(21) Application number: 21745684.7
(22) Date of filing: 24.06.2021
(51) Int. Cl.: B29D 11/00

(54) **METHODS OF PROCESSING OF STRUCTURED REPLICATION MATERIALS FOR OPTICAL AND OTHER DEVICES AND OPTICAL DEVICES**
VERFAHREN ZUR VERARBEITUNG VON STRUKTURIERTEN REPLIKATIONSMATERIALIEN FÜR OPTISCHE UND ANDERE VORRICHTUNGEN UND OPTISCHE VORRICHTUNGEN
PROCÉDÉS DE TRAITEMENT DE MATÉRIAUX DE RÉPLICATION STRUCTURÉS POUR DISPOSITIFS OPTIQUES ET AUTRES DISPOSITIFS ET DISPOSITIFS OPTIQUES

(30) Priority: 26.06.2020 US 202063044685 P
(43) Date of publication of application: 03.05.2023
(73) Proprietor: Nilt Switzerland GmbH, 8810 Horgen (CH)
(72) Inventor: MOXEY, Mark Allen, 8810 Horgen (CH); CZOLKOS, Ilja, 8810 Horgen (CH); BALIMANN, Martin, 8810 Horgen (CH); SCHMIDLIN, Moritz, 8810 Horgen (CH); LENART, Robert, 8810 Horgen (CH); SENN, Tobias, 8810 Horgen (CH)
(74) Representative: Fish & Richardson P.C.
(86) International application number: PCT/EP2021/067324
(87) International publication number: WO 2021/260098

(56) References cited:
- US-A1- 2010 123 260
- US-A1- 2012 140 340
- US-A1- 2018 095 193
- US-B2- 8 679 380

## Description

### BACKGROUND

In a replication process, a given structure or a negative thereof is reproduced. In some cases, a structure is reproduced in a replication material disposed on a substrate, and the structured replication material can perform optical functions. The replication material may be processed to provide beneficial effects.

US 2012/0140340 describes a method for manufacturing a lens. A lens material is applied to the substrate and to sacrificial material provided in a recess. The lens material is cured and then the sacrificial material is removed.

US 2018/0095193 describes a wafer-level method for manufacturing lenses. Light-curable lens resin is deposited between a mold and a first side of a transparent substrate. The first side of the transparent substrate has an opaque coating with a plurality of apertures respectively aligned with a plurality of lens-shaped recesses of the mold. A second side of the transparent substrate is exposed to light to illuminate portions of the resin aligned with the plurality of apertures to form a respective plurality of lenses.

US 2010/0123260 describes a method and stamp for forming lenses on a wafer. The stamp includes a mask arranged on a substrate and aligned with a plurality of lens-shaped cavities. The lens-shaped cavities are used to imprint a plurality of lenses into a curable material.US 8679380 describes a method for forming a lens. An uncured resin is interposed between a plate and a flat-shaped transparent substrate disposed to face each. Light irradiation is performed on the resin.

### FIELD OF THE DISCLOSURE

The present disclosure relates to processing of structured replication materials for optical and other devices.

### SUMMARY

In one aspect, the present disclosure describes a method according to claims 1 to 4 and 7-10. In another aspect, the present disclosure describes a method according to claim 5.

The disclosure also describes apparatuses. For example, an optical device according to claim 11 is provided.

Another example of an apparatus is an optical device according to claim 12.

The disclosure also describes a module according to claim 13.

Embodiments of the subject matter described in this specification can be implemented to realize one or more of the following advantages. In some implementations, replication material may be removed selectively from portions of a substrate surface. In some implementations, mechanical stress or warping in a device or during device processing may be reduced. In some implementations, delamination in a device or during device processing may be reduced. In some implementations, device density may be increased. In some implementations, a replication material in a replication process may better retain its replicated structure. In some implementations, device functionality may be enhanced. In some implementations, light interaction may be more precise. In some implementations, light interaction may be more reliable and/or predictable. In some implementations, device cosmetic characteristics may be improved. In some implementations, mechanical robustness of a module may be improved.

The details of one or more implementations are set forth in the accompanying drawings and the description below. Other features and advantages will be apparent from the description and drawings, and from the claims.

### BRIEF DESCRIPTION OF THE DRAWINGS

FIGS. 1A-1D are schematics showing an example of replication material processing which does not form part of the claimed invention.
FIGS. 2A-2C are schematics showing an example of replication material processing.
FIGS. 3A-3D are schematics showing an example of replication material processing.
FIGS. 4A-4B are schematics showing an example of replication material removal which does not form part of the claimed invention.
FIG. 5 is a schematic showing an example of replication material disposed on a substrate surface.
FIGS. 6A-6B are schematics showing an example of replication material processing which does not form part of the claimed invention.
FIGS. 7A-7B are schematics showing an example of replication material processing.
FIGS. 8A-8D are schematics showing examples of optical modules. modules of which the examples shown in FIGS. 8A-8C do not form part of the claimed invention.

### DETAILED DESCRIPTION

The present disclosure describes processes for replication materials used in replication processes. In certain implementations, this disclosure describes imprinting a first portion of a replication material disposed on a substrate surface, illuminating the first portion of the replication material, and removing a second portion of the replication material.

In general, replication refers to a technique by means of which a given structure is reproduced, e.g., etching, embossing or molding. In an example of a replication process, a structured surface is embossed into a liquid or plastically deformable material (a "replication material"), then the material is hardened, e.g., by curing using ultraviolet radiation or heating, and then the structured surface is removed. Thus, a negative of the structured surface (a replica) is obtained.

The replicated structure provides a mechanical, electrical, or optical functionality (or a combination of those functionalities) due to the structure imposed by the structured surface.

In some cases, replication may be implemented by stamping processes. In the case of a stamping process, which also may be referred to as an imprinting process, the structured surface is a surface of a stamp that is pressed into the liquid or plastically deformable material (or has the liquid or plastically deformable material pressed into it).

"Imprinting," as used in this disclosure, may include other processes such as one or more of embossing, debossing, stamping, and nano-imprinting.

While the liquid or plastically deformable material in an imprinting process may be a bulk material (for example, a block of material), in other implementations the liquid or plastically deformable material is a layer or droplet (e.g., a coating) provided on a substrate surface.

When a replication material disposed on a substrate surface is imprinted, the replication material may spread, either before, during, or after imprinting by the stamp. For example, the replication material may spread away from a stamping surface of the stamp, to cover portions of the substrate surface that are not being stamped. Replication material that remains on undesired portions of the substrate surface may cause negative effects in some cases.

For example, replication material that remains beyond a desired portion of the substrate surface may cause warping and mechanical stress across the substrate. This may lead to difficulty during imprinting: for example, if the substrate is warped from flat to curved, a flat stamp may no longer properly imprint the replication material across portions of the entire substrate surface. Warping and mechanical stress also may damage devices created by the replication process.

As another example, in some implementations, the replication material is disposed on a plurality of defined separate portions of the substrate surface, and the substrate is diced between the separate portions after imprinting, such that each separate portion (along with the imprinted replication material on the separate portion) corresponds to a different device. In this case, if the replication material has spread into and remains in areas of the substrate surface between the defined separate portions, the replication material on the defined portions may delaminate or otherwise be damaged during imprinting or dicing. The replication material on areas of the substrate surface between the defined separate portions also may inhibit the dicing process.

Furthermore, replication material delamination may occur during stressing of a device. For example, temperature cycling, high temperatures, and/or high humidity may cause replication material delamination in a fabricated device. Replication material that remains across an entire substrate surface (as opposed to remaining in defined portions of the substrate surface) may increase the likelihood of such replication material delamination.

In addition, in some implementations, certain areas of the substrate surface include electrical contacts. If the replication material remains on the electrical contracts, the replication material may prevent proper access to the contacts.

Besides the possible practical consequences of replication material remaining beyond a desired portion of a substrate surface, the replication material may cause a device to fail a visual (e.g., cosmetic) specification.

Therefore, in some cases, in can be beneficial to remove portions of the replication material selectively from portions of the substrate surface.

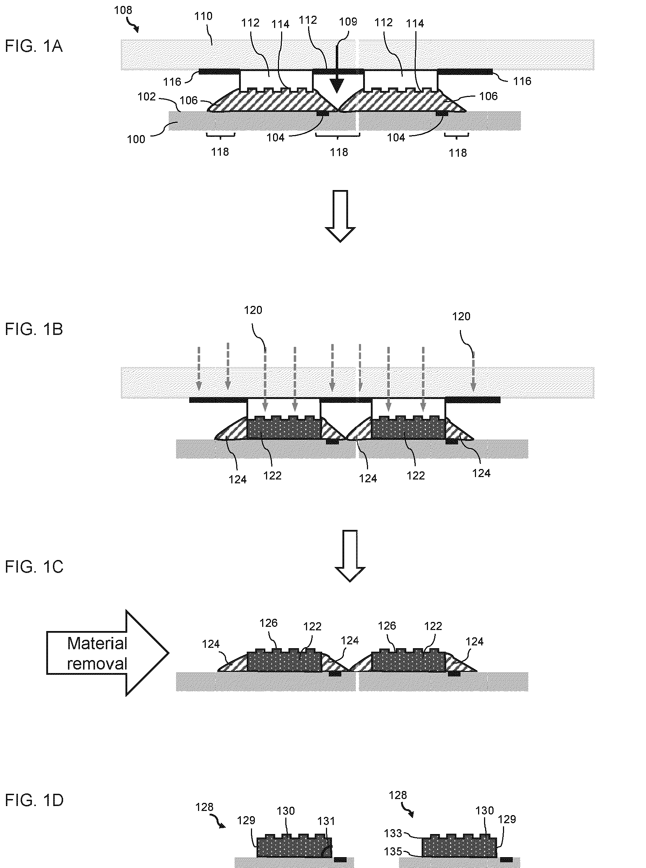

As shown in FIG. 1A, some implementations include a substrate 100 having a substrate surface 102. Depending on the implementation, the substrate 100 may be composed, for example, of a semiconductor material, a polymer material, or a composite material including metals and polymers, or polymers and glass materials. The substrate 100 may include hardenable materials such as thermally or UV-curable polymers. In some implementations, the substrate 100 is transparent, e.g., a glass. In some implementations, the substrate 100 is fully or partially flexible, e.g., a plastic.

In some implementations, the substrate 100 includes one or more electrical circuits. The electrical circuits, for example, may be configured to detect cracks in the substrate 100. In some implementations, cracks are detected by a resistive circuit design in which an open circuit (e.g., a high detected resistance) indicates a crack. In some implementations, an electrical circuit included in the substrate 100 may be configured to detect moisture. For example, moisture may be detected by a capacitive circuit design in which moisture or another contaminant changes a measured capacitance. In some implementations, the electrical circuit may control an optical function of a device.

In some implementations, the electrical circuits may include one or more contacts 104 at the substrate surface 102, the contacts 104 being usable, for instance, to read out signals from the electrical circuits.

In some implementations, the substrate surface 102 may include structures not shown in FIG. 1A, e.g., metasurfaces, waveguides, or other optical structures. Such structures disposed on all or part of the substrate surface 102 may be covered in a replication material as part of processing. In some implementations, the substrate surface 102 may not be flat, e.g., the substrate surface 102 may be curved or stepped.

Replication material 106 is disposed on the substrate surface 102, and is imprinted using a stamp 108. In some implementations, the replication material 106 is deposited onto the substrate surface 102, after which the stamp 108 is brought into contact with the replication material 106. In some implementations, the replication material 106 is provided on the stamp 108 (e.g., on the protrusions 112 of the stamp), which is then brought towards the substrate 100 (or has the substrate 100 brought towards it), as indicated by the arrow 109, such that the replication material 106 is disposed on the substrate due to relative movement of the stamp 108 and substrate 100.

In the example not forming part of the claimed invention of FIGS. 1A-1D, the stamp 108 includes a backing 110 and two protrusions 112. Each protrusion 112 includes a face 114 that contacts a respective portion of replication material 106. In the example of FIGS. 1A-1D, the face 114 is structured. In some implementations, a stamp face may be partially or entirely smooth.

The stamp 108 also includes a masking layer 116. In this example, the masking layer 116 is positioned between the protrusions 112.

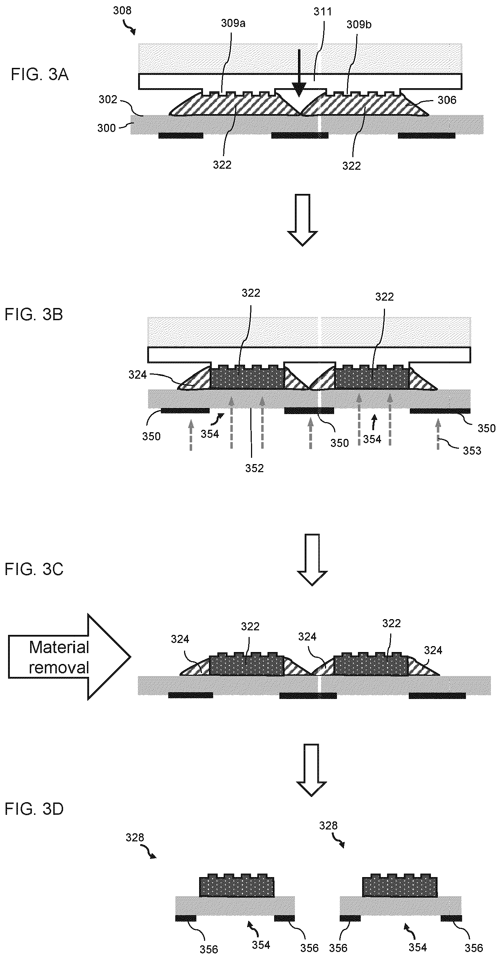

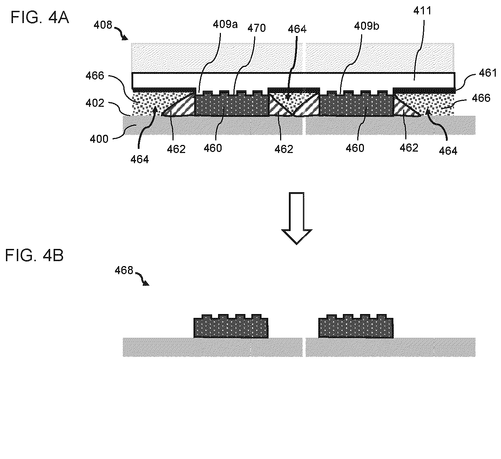

The stamp 108 may be composed of a variety of materials, including a cured replication material or a patterned semiconductor wafer (e.g., a patterned silicon wafer), in some implementations including deposited metal layers. In some implementations, all or part of the stamp 108 (e.g., the backing 110) may be transparent, e.g., may be composed of glass. This feature may allow for light to be transmitted through portions of the stamp 108, as described below. In some implementations, the stamp 108 may be thin and/or flexible, e.g., composed of polycarbonate foil. In some implementations, the protrusions 112 (along with other stamping elements described in this disclosure, e.g., the stamp materials 311 and 411 shown in FIGS. 3A and 4A) may be composed of a polymer, e.g., PDMS.

The replication material 106 may include, for example, one or more of a polymer, a spin-on-glass, nanoparticles dispersed in a solvent, or any other material that may be structured in a replication process. Suitable materials for replication include, for example, hardenable (e.g., curable) polymer materials or other replication materials, i.e. materials which are transformable in a hardening or solidification step (e.g., a curing step) from a liquid or plastically deformable state into a solid state. For example, the replication material may be a UV-curable and/or thermally-curable transparent epoxy.

The replication material 106 may be deposited by printing (e.g., inkjet printing) or by another method. Examples of deposition methods are jetting, dispensing, and screenprinting. In some implementations, the replication material is deposited in portions of precisely known volumes (e.g., in volumes exact to within less than 3% of the deposited volume of each portion).

The replication material 106 also may have characteristics suitable for a device resulting from the replication. For example, the replication material (in either as-deposited or cured form) may have a particular index of refraction, thermal or electrical conductivity, or chemical or physical resistance (e.g., low reactivity with atmospheric oxygen). A wide variety of materials suitable for replication may be used.

The masking layer 116 may be composed of any opaque material, or any material able to block the transmission of light. For example, the masking layer 116 may include a metal (e.g., black chrome). The masking layer 116 may include a non-transparent photoresist. In some implementations, the masking layer 116 has thermal expansion properties (e.g., a coefficient of thermal expansion) similar to those of the backing 110, in order to decrease possible cracking or delamination of the masking layer 116 during heating or curing steps.

In some implementations, the stamp 108 is pressed toward the substrate surface 102 with a predetermined pressure or to a predetermined spatial extent. In some implementations, the stamp 108 is heated before or during the imprinting such that the stamp 108 is at an elevated temperature during the imprinting. This may cause the replication material 106 to soften and to be shaped more easily by the stamp 108. In some implementations, the replication material 106 is at an elevated temperature during the imprinting (e.g., by heating of the substrate 100). In some implementations, the stamp 108 is pressed against the replication material for a predetermined amount of time.

During imprinting, portions of the replication material 106 may spread across the substrate surface 102. For example, the replication material 106 may spread to include portions not aligned with the faces of the stamp 108 in contact with the replication material 106. For example, in FIG. 1, the portions of the replication material 106 indicated by the brackets 118 are between or adjacent to stamped portions of the replication material 106, and may serve no useful optical purpose. As described above, replication material located in undesired areas of the substrate surface 102 may impair device fabrication or operation.

Therefore, as shown in FIG. 1B, the replication material 106 is illuminated with light 120. The light 120 is transmitted through the stamp 108, which, in this example, has a substantially transparent backing 110 and protrusions 112. However, the masking layer 116 is not transparent to the light 120 (or is less transparent to the light 120 than are the backing 110 and protrusions 112), such that light 120 is not transmitted through portions of the stamp 108 that include the masking layer 116.

The masking layer 116 may be configured such that apertures in the masking layer 116 are aligned with respective portions of the replication material that are contacted by the stamp 108.

In some implementations, the masking layer 116 is disposed between protrusions. In some implementations, the masking layer is not in contact with the replication material, and the protrusions are in contact with the replication material, during illumination.

"Transparent," as used in this disclosure, refers at least to relative transparency for particular wavelengths of light, e.g., wavelengths of light included in the light 120 used to illuminate the replication material 106, or wavelengths of light to which the replication material 106 may be sensitive.

In some implementations, the light 120 includes ultraviolet (UV) light. In some implementations, the light 120 includes visible or infrared light. In some implementations, the light 120 includes laser-emitted light.

As shown in FIG. 1B, the replication material 106 reacts to the light 120. Illuminated portions 122 of the replication material may be modified, for example, cured, hardened, or otherwise modified structurally and/or chemically. In this example, non-illuminated portions 124 of the replication material retain their previous material characteristics.

In some implementations, the replication material 106 is further treated while in contact with the stamp 108. For example, the replication material 106 may be heated while in contact with the stamp 108. The replication material 106 may be a UV- and heat-cured material requiring both UV exposure and heat treatment in order to be fully cured; therefore, the illuminated portions 122, after UV illumination and heating may be fully or significantly cured, while the non-illuminated portions 124 remain uncured or less fully cured than the illuminated portions 122.

As shown in FIG. 1C, after illumination and/or curing, the stamp 108 is removed. Because of the imprinting process (including, in some implementations, the illumination and/or curing), structures of the faces 114 of the stamp 108 are replicated in structures of the surfaces 126 of the illuminated portions 122 of the replication material.

Non-illuminated portions 124 of the replication material are removed by a selective removal process. For example, the replication material on the substrate 100 may be immersed in or placed in contact with a solvent or other solution that selectively dissolves the non-illuminated portions 124 compared to the illuminated portions 122 of the replication material. The solvent may dissolve selectively because of chemical or other changes caused by the illumination in the illuminated portions 122. In various implementations, solvents may include acetone, isopropanol, or a developer configured to preferentially remove the replication material.

In some implementations, the non-illuminated portions 124 of the replication material may be removed by a targeted stream of dissolving liquid. For example, a highpressure stream of deionized water and/or a solvent (as described above) may be aimed at the non-illuminated portions 124 of the replication material, so as to preferentially remove the non-illuminated portions 124. In some implementations, the non-illuminated portions 124 may be removed using an ultrasonic bath of water, a solvent as described above, or another solution that selectively dissolves the non-illuminated portions 124.

In some implementations, the replication material may be further cured (e.g., with light exposure, heat treatment, or both) after the removal of the stamp 108, before or after the removal of the non-illuminated portions 124 of the replication material.

After selective removal of the non-illuminated portions 124 of the replication material, the substrate 100 may be diced, to obtain the separate devices 128 shown in FIG. 1D. In some implementations, multiple portions of replication material may be included in a single finished device.

Because replication material beyond the protrusions 112 of the stamp 108 is substantially or entirely removed, the substrate 100 may warp less than if the replication material were to remain over a greater portion of the substrate surface 102. The substrate 100 and the remaining replication material (e.g., the illuminated replication material 122) may be under less mechanical stress than if the replication material remained spread over a greater portion of the substrate surface 102.

In some implementations, the imprinting of the replication material may cause the replication material to have a predetermined characteristic.

For example, the replication material may be imprinted such that the replication material, after imprinting, has a particular thickness or range of thicknesses. In accordance with some implementations, the replication material according to the present disclosure may be imprinted to have a thickness anywhere from the nanometer range to the millimeter range, or larger.

The replication material may be imprinted such that a surface of the replication material has a flatness within a desired range and/or a roughness within a desired range. For example, in some implementations, a face of the stamp may be smooth, such that the surface of the replication material after imprinting is smooth.

In some implementations, the predetermined characteristic of the replication material is an optical functionality based at least in part on the faces 114 replicated in the structured surfaces 126 of the replication material. For example, after imprinting (in some implementations, including after curing), the replication material may form diffractive optical elements including many pixels or individual structures (e.g., structures 130 in FIG. 1D). The structures 130 may include, for example, pillars, posts, or ridges, which in some implementations may be arranged in arrays or other patterns. In some implementations, each structure 130 may have a dimension less than about 100 µm, less than about 20 µm, or less than about 1 µm.

The optical functionality may include, for example, one or more of lensing, focusing, reflecting or anti-reflecting, beamsplitting, or optical diffusing. The structures 130 may be microlenses, such that each portion of illuminated replication material 122 after imprinting includes a microlens array. The structures 130 may include a diffractive optical element or a grating, e.g., a diffraction grating. The structures 130 after imprinting may include and/or form a metasurface having an optical functionality.

In some implementations, the predetermined characteristic is a non-optical functionality, e.g., hydrophobicity or hydrophilicity, in some cases determined by the form of the structures 130.

Because the replication material is removed selectively from portions of the substrate surface 102, delamination of the replication material during imprinting, curing, or dicing, or during stressing of a fabricated device, may be reduced or prevented. Therefore, the resulting devices 128 may function more effectively because, for example, the replication material may better retain the replicated structure of the stamp, with reduced loss of replication material or distortion of the structures 130. In addition, a cosmetic yield of the fabrication process may be improved.

Furthermore, the devices 128, from which portions of the replication material were removed, may operate more effectively than devices from which portions of replication material are not removed. For example, an optical functionality of the devices may be enhanced or more precise. Light transmitted through or modified by the devices may be directed and/or modified more precisely or reliably.

In addition, because replication material was removed from the circuit contacts 104a, 104b, the electrical contacts 104a, 104b may be accessed without, for example, having to puncture through a layer of replication material on top of the contacts 104a, 104b. Rather, the contacts 104a, 104b already may be exposed at the substrate surface.

In the example devices 128, the replication material 122 has approximately straight sidewalls 129, oriented approximately perpendicularly to the substrate surface 102. In practice, these sidewalls 129 may include some roughness; however, compared to devices made without selective illumination and removal steps, the sidewalls 129 may be straighter and/or more perpendicularly oriented with respect to the substrate surface. For example, in some implementations, the sidewalls 129 form an angle 131 with the substrate surface 102 of between about 85 degrees and about 95 degrees. "Approximately perpendicular" angles may include angles between about 80 degrees and about 100 degrees.

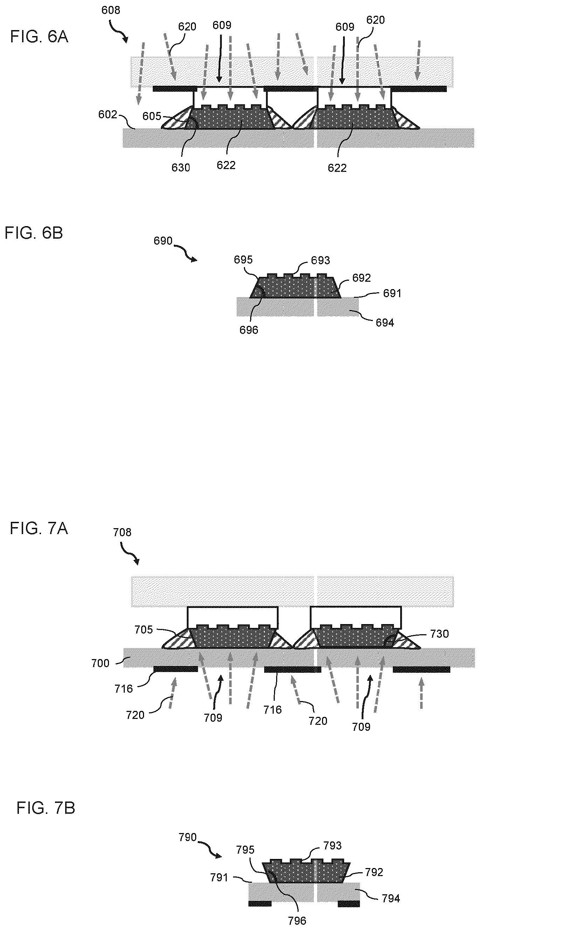

In some implementations, the angle 131 (and other sidewall angles defined in this disclosure, e.g., in reference to FIGS. 6A-7B) may be defined as the angle between the substrate surface and a line between two points that define bounds of the sidewall (e.g., points 133 and 135 in FIG. 1D). The angle 131, in some implementations, may be different from a contact angle of the sidewall.

The sidewalls 129 are straight at least in that the sidewalls 129 have straight profiles; in some implementations, the sidewalls 129 may be curved in another direction. For example, the replication material in each device 128 may be round when viewed from the top-down, but the profiles of the sidewalls 129 may be straight (e.g., the sidewalls 129 may be locally straight along a line segment between points 133 to 135).

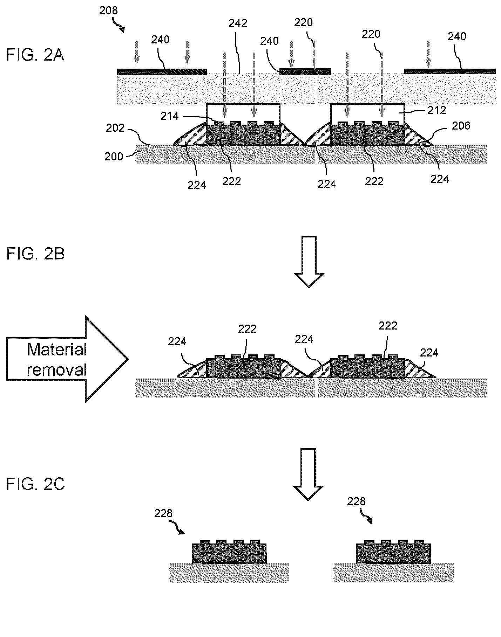

The foregoing possible sidewall characteristics also may occur in other implementations, e.g., the implementations of FIGS. 2A-3D.

These sidewall characteristics may provide advantages in completed devices. For example, devices including a structured replication material having these sidewall angles may operate more effectively than devices in which sidewall angles are smaller, for example, sidewall angles resulting from the natural spread of the replication material. In addition, devices including a structured replication material having approximately straight sidewalls may operate more effectively than devices in which sidewalls are curved, e.g., sidewalls resulting from a natural meniscus of the replication material with the substrate and/or the stamp. For example, an optical functionality of the devices may be enhanced or more precise. Light transmitted through or modified by the devices may be directed and/or modified more precisely or reliably.

Although FIGS. 1A-1D show examples not forming part of the claimed invention including two portions of replication material disposed on respective portions of the substrate surface, other implementations may include only one portion of replication material, or more than two portions of replication material.

Further, although FIGS. 1A-1D show two portions of replication material undergoing a replication process such that the same structure is replicated in each portion of replicated material, in some implementations different replication processes may be applied to different portions of replication material (e.g., different portions of replication material may be imprinted to have different surface structures).

Although FIGS. 1A-1B show a stamp including protrusions corresponding to portions of replication material, in some implementations the stamp does not include protrusions. For example, in some implementations a substantially planar face of the stamp (e.g., having replication structures formed in the face) is used to imprint multiple portions of replication material that may be part of separate finished devices. For example, FIGS. 3A and 4A, described in more detail below, show stamps that do not include protrusions.

FIGS. 2A-2C show another implementation of selective removal of replication material. As shown in FIG. 2A, replication material 206 is disposed on a surface 202 of a substrate 200. A stamp 208 is in contact with the replication material 206 and is used to imprint the replication material 206, as described in reference to FIG. 1A-1B.

The stamp 208 includes a masking layer 240 on a top surface 242 of the stamp backing 210. The top surface 242 is opposite the faces 214 of the protrusions 212 that contact the replication material 206. As shown in FIG. 2A, the replication material 206 is illuminated with light 220 through the stamp 208 (which may be, as previously described, partially transparent). As previously described, the replication material 206 reacts to the light 220, with illuminated portions 222 of the replication material being modified. Apertures in the masking layer 240 are aligned with portions of the replication material that are contacted by the stamp 208.

In FIGS. 2B-2C, the stamp 208 is removed, non-illuminated portions 224 of the replication material are selectively removed, and the substrate 200 is diced to form separate optical devices 228. Details of these steps, which also include, for example, further curing, are given in reference to FIGS. 1C-1D above.

As shown in FIG. 3A, some implementations include replication material 306 disposed on a surface 302 of a substrate 300. A stamp 308 is used to imprint the replication material 306, as described above. In this example, the stamp 308 includes stamping sections 309a, 309b of a stamp material 311, each stamping section 309a, 309b being brought into contact with a respective portion of replication material 322. In some implementations, the replication material is provided on the stamping sections 309a, 309b, and then the stamp 308 is brought into contact with the substrate 300.

As shown in FIG. 3B, a masking layer 350 is disposed on a bottom surface 352 of the substrate 300, opposite the surface 302 on which the replication material 306 is disposed. Light 353 is directed towards the bottom surface 352, and is transmitted through apertures 354 in the masking layer 350. The substrate 300 may be transparent in order to permit the light transmission. The apertures 354 align with portions of the replication material 306 in contact with the stamp 308.

As described above in reference to FIG. 1B, the light 353 modifies an illuminated portion 322 of the replication material. The structure of FIG. 3B may be modified (as shown in FIGS. 3C-3D) as described above, including, in various implementations, removal of the stamp 308, one or more further curing steps, selective removal of the non-illumination portion 324 of the replication material (FIG. 3C), and dicing of the wafer 300. Optical devices 328 may be fabricated, as shown in FIG. 3D.

In the example of FIG. 3D, portions 356 of the masking layer 350 are retained in final devices. These portions 356, used to provide selective illumination as shown in FIG. 3B, also may define apertures 354 that provide optical functionality in the finished devices 328. For example, light may be transmitted through the apertures 354 and modified by the replication material (e.g., by surface structures of the replication material), and modified light may be transmitted away from the devices 328.

In some implementations, the masking layer 350 is removed subsequent to the selective illumination being provided (i.e., in some implementations the masking layer 350 is not present in completed devices).

In some implementations, an alternative or additional method is used for selectively removing non-illuminated portions of replication material. FIG. 4A shows a replication material on a surface 402 of a substrate 400. The replication material previously has been illuminated selectively, as described above, such that the replication material includes a modified, illuminated portion 460 and a non-illuminated portion 462. In some implementations, the replication material previously has been heat-cured.

In this example, the stamp 408 includes stamping sections 409a, 409b of a stamp material 411, each stamping section 409a, 409b being brought into contact with a respective portion of replication material 570. In some implementations, the replication material is provided on the stamping sections 409a, 409b, and then the stamp 408 is brought into contact with the substrate 400.

The masking layer 461 is disposed on a surface of the stamp 408 facing the substrate 400. In some implementations, the masking layer 461 is disposed between stamping sections (e.g., 409a and 409b). In some implementations, the masking layer is not in contact with the replication material, and the stamping sections are in contact with the replication material, during illumination.

In this implementation, the non-illuminated portion 462 of the replication material is removed while the stamp 408 remains in contact with the illumination portion 460 of the replication material. As shown in FIG. 4A, a solvent 466 may be directed into gaps (e.g., gaps 464) between the stamp 408 and the substrate 400 and/or the non-illuminated portion 462 of the replication material. For example, the solvent 466 may be pressurized or directed to flow through channels formed by such gaps, dissolving and removing non-illuminated portions of replication material across the substrate 400. In some instances, pressure and/or a vacuum may be applied at edges of the substrate 400.

Removal of the non-illuminated portions of the replication material results in the structure 468 of FIG. 4B, which may be further processed (e.g., diced) as previously described.

The method not forming part of the claimed invention of FIG. 4A may provide advantages over methods in which the non-illuminated portions of the replication material are removed after the stamp 408 is removed. For example, contamination of surface structures 470 of the replication material may be decreased, because the surface structures 470 are protected by the stamp 408 during solvent exposure. As another example, possible negative effects that the solvent 466 may have on the surface structures 470 (e.g., slight etching) may be decreased or prevented, because the surface structures 470 are protected by the stamp 408 during solvent exposure.

Although FIGS. 4A-4B show an implementation not forming part of the claimed invention in which the masking layer (e.g., masking layer 461 in FIG. 4A) is disposed on the stamp and faces the substrate, in some implementations, selective removal of the non-illuminated portions of the replication material while the stamp is in contact with the replication material may be performed with other masking layer configurations. For example, the method of FIGS. 4A-4B may be performed with a stamp in which the masking layer is disposed on a surface of the stamp facing away from the substrate (e.g., as shown in FIG. 2A), or in which the masking layer is disposed on the substrate (e.g., as shown in FIG. 3A).

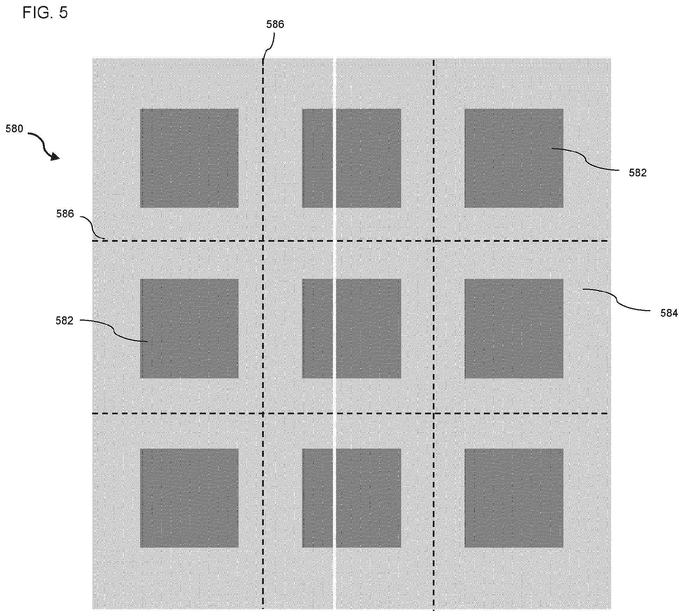

As shown in FIG. 5, in some implementations a substrate surface 580 (shown in a top-down view, as opposed to the profile view of FIGS. 1A - 4B) includes an array of replication material areas (e.g., replication material areas 582) stamped in an imprinting process. Although the replication material areas 582 are shown schematically as rectangles, in various implementations the replication material areas 582 may be differently shaped (e.g., circles) or include complex surface structures, as previously described.

The replication material areas 582 are separated by areas 584 having no replication material. For example, the replication material may have been removed in the areas 584 by a selective removal process, as described above.

The underling substrate then may be diced along the dicing tracks 586, which, in the example of FIG. 5, coincide with the areas 584 having no replication material. When diced into separate pieces, replication material on each replication material area 582 forms part of a respective separate optical device.

In some implementations, each respective separate optical device may have dimensions (e.g., width and length), for example, between about 0.5 mm and about 20 mm.

The selective removal of replication material from the areas 584 may provide advantages during processing or in a finished device. Because replication material may be removed reliably from areas between stamped portions of replication material, a higher density of stamped replication material areas (potentially corresponding to a higher density of finished devices after dicing) may be achieved. In addition, as described above, delamination, warping, mechanical stress, and structure damage may be reduced by limiting the coverage of replication material during replication processing.

In some implementations, an optical device including a replication material on a substrate may be characterized by the geometry of the replication material. This geometry may be indicative of a method of fabrication of the optical device, e.g., a method including selectively removing portion of replication material using masked illumination. However, in some implementations, the device geometries described below may occur irrespective of a method of fabrication of the optical device.

As shown in FIG. 6A, which does not form part of the claimed invention, a replication material undergoes masked illumination through a stamp 608, as described in more detail above. During the illumination, incoming light 620 may leak slightly from edges of apertures 609 defined in the masking layer 616. Because of the light leakage, shapes of the apertures 609 may not correspond exactly to shapes of exposed portions of the replication material.

Leakage of the light 620 may be caused, for example, by the light 620 approaching the stamp 608 with a non-perpendicular orientation, as shown (in exaggerated form) in FIG. 6A. In some implementations, leakage of the light 620 may be caused by scattering of the light 620 in the replication material or in the stamp 608.

In some implementations, the light leakage takes the form of a flaring of the light 620, such that, for each aperture 609, an area of exposed underlying replication material is greater at the substrate surface 602 than at the points of contact between the replication material and the stamp 608. Because of this effective flaring of the light 620, illuminated portions 622 of the replication material may have sidewalls 605 forming acute contact angles 603 with the substrate surface 602 when oriented in profile, as in FIG. 6A.

The structure of FIG. 6A may be processed further, as described above, to obtain the optical device 690 of FIG. 6B. The optical device 690 includes a replication material 692 disposed on a surface 691 of a substrate 694. The replication material 692 may include, for example, a resin, an epoxy, a polymer, or another material. The replication material 692 has a structure (e.g., a structure 693 on a surface of the replication material 692) that provides an optical functionality. As described above, the optical functionality may include, for example, one or more of lensing, reflecting or anti-reflecting, beamsplitting, or optical diffusing. The replication material 692 may form a diffractive optical element.

The flared sidewalls 695 of the replication material form acute contact angles 696 with the substrate surface 691. In some implementations, the acute contact angles 696 may indicate that the optical device 690 was fabricated by a process including illuminating the replication material 692 through a stamp, as shown in FIG. 6A.

As shown in FIG. 7A, a replication material undergoes masked illumination through a substrate 700, as described in more detail above. A masking layer 716 on the substrate 700 defines apertures 709. During the illumination, incoming light 720 may leak slightly from edges of the apertures 709, as described in reference to FIG. 6A above. For example, the light 720 may be scattered slightly as it passes through the substrate 700 or the replication material.

In some implementations, the light leakage takes the form of a flaring of the light 720, such that, for each aperture 709, an area of exposed underlying replication material is greater at points of contact between the replication material and the stamp 708 than at the substrate surface 702. Because of this effective flaring of the light 720, illuminated portions 722 of the replication material may have sidewalls 705 forming obtuse contact angles 730 with the substrate surface 702 when oriented in profile, as in FIG. 7A.

The structure of FIG. 7A may be processed further, as described above, to obtain the optical device 790 of FIG. 7B. The optical device 790 includes a replication material 792 disposed on a surface 791 of a substrate 794. The replication material 792 may include, for example, a resin, an epoxy, a polymer, or another material. The replication material 792 has a structure (e.g., a structure 793 on a surface of the replication material 794) that provides an optical functionality. As described above, the optical functionality may include, for example, one or more of lensing, reflecting or anti-reflecting, beamsplitting, or optical diffusing.

The flared sidewalls 795 of the replication material form obtuse contact angles 796 with the substrate surface 791. In some implementations, the obtuse contact angles 796 may, indicate that the optical device 790 was fabricated by a process including illuminating the replication material 792 through the substrate, as shown in FIG. 7A.

The example devices 690, 790 include respective replication material on only defined portions of their respective substrate surfaces. For example, the replication material covers only a single contiguous area of the respective substrate surfaces, each contiguous area being surrounded laterally by a portion of the substrate surface that does not include replication material.

In addition, the replication material in the example devices 690, 790 has defined, straight sidewalls. These sidewalls may be oriented, in various implementations, acutely, obtusely, or perpendicularly in reference to the respective substrate surfaces, depending on an orientation of illumination and a degree of light flaring.

Because the replication material in the example devices 690, 790 is disposed on only some portions of their respective substrate surfaces, the devices 690, 790 may operate more effectively than if the replication material were spread across a larger portion of the substrate surfaces. For example, an optical functionality of the devices may be enhanced or more precise. Light transmitted through or modified by the devices may be directed and/or modified more precisely or reliably. In some implementations, these operational improvements may result at least in part because of the angle of the sidewalls and/or a straightness of the sidewalls.

In some implementations, devices fabricated by a process including selective illumination and removal of the replication material, as described above, or devices including a replication material having one or more of the characteristics described above, may be integrated into optoelectronic or other modules.

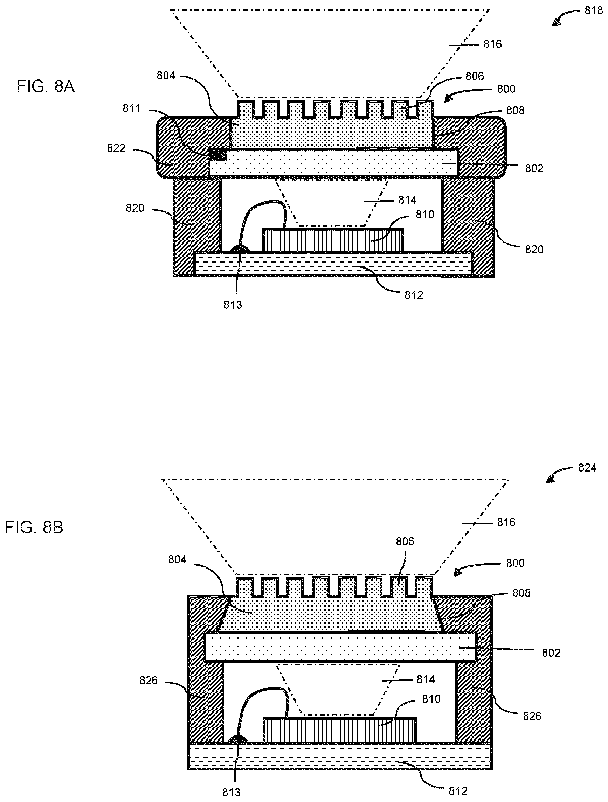

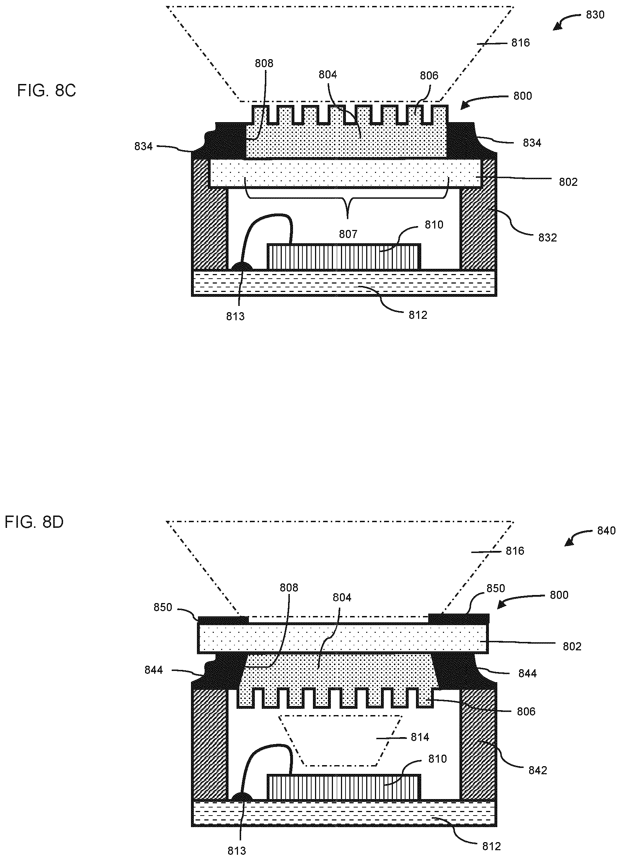

FIGS. 8A-8C show examples of modules including optical devices not forming part of the claimed invention. FIG. 8D shows an example of a module including an optical device according to the claimed invention. In each of FIGS. 8A-8D, the optical device 800 includes a substrate 802 and a replication material 804 formed on the substrate 802, the replication material 804 having a structured surface 806 that provides an optical functionality to the optical device 800. The replication material 804 includes a straight sidewall 808, e.g., a sidewall defined by a selective illumination process. The replication material may be limited to a particular portion of the substrate surface (e.g., portion 807 as shown in FIG. 8C).

Each module of the examples of FIGS. 8A-8D also includes a light-emitting and/or light-sensing component 810 coupled to or integrated into a second substrate 812, which may include circuit elements 813 connected to the light-sensing component 810. The optical device 800 is configured to interact with light 814 generated by the light-emitting component, and/or interact with light 816 incident on the module such that light 814 transmitted through optical device 800 is received by the light-sensing device. For example, the module, using the optical device 810, may produce one or more of structured light, diffused light, or patterned light.

For example, in some implementations, the component 810 is a light-sensing component (e.g., a photodiode, a pixel, or an image sensor), the light 816 is incident on the module, and the light 814 is modified by the optical device 810. For example, the optical device 800 may focus patterned or structured light onto the light-sensing component 810.

In some implementations, the component 810 is a light-emitting component, e.g., a vertical-cavity surface-emitting laser or a light-emitting diode.

In some implementations, a module may including both light-emitting and light-sensing components. For example, a module may emit light that interacts with an environment of the module and is then received back by the module, allowing the module to act, for example, as a proximity sensor or as a three-dimensional mapping device.

The modules described herein may be part of, for example, time-of-flight cameras or active-stereo cameras. The modules may be integrated into systems, for example, mobile phones, laptops, televisions, wearable devices, or automotive vehicles.

In the example of FIG. 8A, the module 818 includes spacers 820. The spacers 820 support and are attached to an element 822 (for example, a polymeric element, e.g., a PCB wafer). The element 822 is attached to the straight sidewall 808 (e.g., by an epoxy). The sidewall 808 forms an approximately perpendicular angle with the substrate 802, e.g., the angles described in reference above in reference to FIG. 1D. The spacers 820 may be composed, for example, of a polymer, a metal (e.g., a lead frame), or another material.

The example of FIG. 8A also includes an electrical contact 811 on a surface of the substrate 802. Because, in some implementations, replication material that would otherwise cover the electrical contact has been selectively removed, the electrical contact 811 may be contacted.

The electrical contact 811 is communicatively coupled to the circuit elements 813, such that a circuit included in the optical device 800 is usable by the module 818. As described above, a circuit included in the optical device 800 may be usable to control operation of the optical device 800 or to monitor characteristics (e.g., temperature) of the optical device 800.

Electrical contacts and circuits (e.g., electronic circuit elements on the same surface as the replication material and adjacent to the replication material and/or on an opposite surface to the replication material) also may be included in implementations according to FIGS. 8B-8D.

In the example of FIG. 8B, the module 824 includes spacers 826 that are attached to the sidewall 808 (e.g., by an epoxy). The sidewall 808 is straight and forms an acute angle with the substrate 802. In some implementations, the spacers 826 are composed of a polymer and are formed by injection molding.

In the example of FIG. 8C, the module 830 includes a spacer 832 attached to the straight, perpendicularly-oriented sidewall 808 by an adhesive 834. The spacer 832 may be composed, for example, of a polymer, a metal (e.g., a lead frame), or another material.

In the example of FIG. 8D, the module 840 includes a spacer 842 attached to the sidewall 808 by an adhesive 844. The sidewall 808 is straight and forms an obtuse angle with the substrate 802. The optical device 800 is configured such that the structured replication material 804 faces the light-emitting and/or light-sensing component 810 within the module 840. The spacer 832 may be composed, for example, of a polymer, a metal (e.g., a lead frame), or another material.

The example of FIG. 8D also includes a masking layer 850 disposed on a surface of the substrate 802, opposite the surface on which the replication material 804 is disposed. The masking layer 850 may define an aperture through which light passes during module operation. In some implementations, the sidewall 808 may be obtusely angled, e.g., where the sidewall 808 was formed by a method including selectively illuminating the replication material 804 through the substrate 802 and through the aperture defined by the masking layer 850.

The example modules (including the optical devices) of FIGS. 8A-8D may provide, in some implementations, advantages over modules and optical devices that do not include a substantially straight sidewall on a replication material. For example, the relative straightness of the sidewall 808 may increase a strength and/or a reliability of attachment between the optical device 800 and the element 822 or the spacer 826, thereby increasing a mechanical robustness of the modules. The relative straightness of the sidewall 808 may improve the optical performance of the modules, e.g., by improving a predictability of light interaction with the replication material.

Advantages also may be provided because the replication material has been selectively removed from portions of the substrate, as described in this disclosure. For example, delamination, warping, mechanical stress, and structure damage may be reduced by the limiting of replication material coverage. Light emitted, detected, or modified by the modules may be more precisely or reliably directed and/or modified. A cosmetic yield of the fabrication process of the modules may be improved.

The respective implementations of perpendicular, acute, or obtuse sidewalls for FIGS. 8A-8D are merely exemplary; the various module structures shown may include, in various implementations, replication materials having alternative sidewall forms.

Although this disclosure sometimes refers to optical devices, the methods, devices, and modules described are not limited to, nor required to include, optical functionality. For example, replication materials may be selectively illuminated and removed on a substrate surface in order to fabricate non-optical devices, or devices that have both an optical functionality and a non-optical functionality. Devices including a replication material on a substrate, the device having the characteristics described above, may have a non-optical functionality.

Therefore, in accordance with the various embodiments of the disclosure, improved methods and devices are described for selectively removing a portion of replication material as part of a replication or other imprinting process.

Various modifications will be readily apparent. For example, the actions described can, in some instances, be performed in a different order and still achieve desirable results. As one example, the processes depicted in the accompanying figures do not necessarily require the particular order shown, or sequential order, to achieve desirable results. In some cases, multitasking and parallel processing may be advantageous.

It should be noted that any of the above-noted embodiments may be provided in combination or individually. Elements of different embodiments described herein may be combined to form other embodiments not specifically set forth above.

Accordingly, other implementations are also within the scope of the claims.

## Claims

1. A method comprising:
pressing a face of a stamp (208) into a first portion of a replication material (206) disposed on a substrate (200), to cause the replication material to have a predetermined characteristic;
exposing the first portion of the replication material (206) to illumination to modify the first portion of the replication material; and
subsequently removing a second portion of the replication material (206) that was not exposed to the illumination,
wherein the stamp (208) comprises a masking layer (240), wherein the masking layer is disposed on a second face (242) of the stamp, the second face being opposite the face that is pressed into the first portion of the replication material (206), and wherein the masking layer (240) shields the second portion of the replication material (206) from the illumination when the first portion of the replication material (206) is exposed to the illumination.

2. The method of claim 1, wherein exposing the first portion of the replication material (206) to the illumination comprises
exposing the first portion of the replication material to the illumination while the face of the stamp (208) is maintained in contact with the first portion of the replication material.

3. The method of claim 1, wherein the masking layer (240) is disposed on a surface of the stamp (208) facing the substrate (200).

4. The method of claim 1, wherein an aperture defined in the masking layer (240) is aligned with the first portion of the replication material (206).

5. A method comprising:
pressing a face of a stamp (308) into a first portion of a replication material (306) disposed on a substrate (300), to cause the replication material (306) to have a predetermined characteristic;
exposing the first portion of the replication material (306) to illumination, to modify the first portion of the replication material (306); and
subsequently removing a second portion of the replication material (306) that was not exposed to the illumination, **characterised in, that** the substrate (300) comprises a masking layer (350) on a second surface (352) of the substrate (300), the second surface (352) being opposite a surface on which the replication material (306) is disposed,
wherein the masking layer (350) shields the second portion of the replication material (306) from the illumination when the first portion of the replication material (306) is exposed to the illumination,
wherein at least a portion of the substrate (300) is transparent to the illumination, and
wherein exposing the first portion of the replication material (306) to the illumination comprises directing the illumination through the substrate (300).

6. The method of claim 1, wherein removing the second portion of the replication material (306) comprises dissolving the second portion of the replication material using a solvent.

7. The method of claim 6, wherein the solvent selectively dissolves the second portion of the replication material (306) that is not exposed to the illumination, relative to the first portion of the replication material that is exposed to the illumination, or wherein removing the second portion of the replication material comprises directing the solvent into gaps between the stamp (308) and the substrate (300) while the face of the stamp is maintained in contact with the first portion of the replication material.

8. The method of claim 1, wherein the predetermined characteristic comprises a surface structure of the replication material (306), optionally wherein the surface structure provides an optical functionality.

9. The method of claim 1, wherein the illumination comprises ultraviolet light.

10. The method of claim 1, wherein the second portion of the replication material (306) is disposed on a first area of a surface of the substrate (300), the method further comprising,
subsequent to removing the second portion of the replication material, dicing the substrate through the first area.

11. An optical device (328) comprising
a substrate (300);
a portion of replication material (306) disposed on a first surface of the substrate (300), the portion of replication material (306) forming one or more diffractive optical elements; and
**characterised by**
a masking layer (350) disposed on a second surface of the substrate (300), the second surface being opposite the first surface, the masking layer (350) being composed of a material that blocks transmission of UV light,
wherein a sidewall of the portion of the replication material (306) has a straight profile, and
wherein the masking layer (350) defines an aperture (354) aligned with the portion of the replication material.

12. An optical device (790) comprising
a substrate (700); and
a replication material (792) disposed on a first surface (791) of the substrate (700), the replication material forming one or more diffractive optical elements; and **characterised by**
a masking layer (716) disposed on a second surface of the substrate (700), the second surface being opposite the first surface,
wherein a sidewall of the replication material has a straight profile and is sloped with an obtuse contact angle with respect to the first surface (791) of the substrate (700).

13. A module (818, 824, 830, 840) comprising:
at least one of a light-emitting device (810) or a light-sensitive device (810); and
an optical device in accordance with any one of claims 11-12,
wherein the optical device is configured (i) to interact with light generated by the light emitting device (810) or (ii) to interact with light incident on the module such that light passing through the optical device is received by the light-sensitive device (810).

## Patentansprüche

1. Verfahren, umfassend:
Pressen einer Fläche eines Stempels (208) in einen ersten Abschnitt eines Replikationsmaterials (206), das auf einem Substrat (200) angeordnet ist, um zu bewirken, dass das Replikationsmaterial eine vorbestimmte Charakteristik aufweist;
Aussetzen des ersten Abschnitts des Replikationsmaterials (206) gegenüber Beleuchtung, um den ersten Abschnitt des Replikationsmaterials zu modifizieren; und
anschließendes Entfernen eines zweiten Abschnitts des Replikationsmaterials (206), der nicht der Beleuchtung ausgesetzt war,
wobei der Stempel (208) eine Maskierungsschicht (240) umfasst, wobei die Maskierungsschicht auf einer zweiten Fläche (242) des Stempels angeordnet ist, wobei die zweite Fläche der Fläche gegenüberliegt, die in den ersten Abschnitt des Replikationsmaterials (206) gepresst wird, und wobei die Maskierungsschicht (240) den zweiten Abschnitt des Replikationsmaterials (206) vor der Beleuchtung abschirmt, wenn der erste Abschnitt des Replikationsmaterials (206) der Beleuchtung ausgesetzt wird.

2. Verfahren nach Anspruch 1, wobei das Aussetzen des ersten Abschnitts des Replikationsmaterials (206) gegenüber der Beleuchtung Folgendes umfasst:
Aussetzen des ersten Abschnitts des Replikationsmaterials gegenüber der Beleuchtung, während die Fläche des Stempels (208) in Kontakt mit dem ersten Abschnitt des Replikationsmaterials gehalten wird.

3. Verfahren nach Anspruch 1, wobei die Maskierungsschicht (240) auf einer Oberfläche des Stempels (208) angeordnet ist, die dem Substrat (200) zugewandt ist.

4. Verfahren nach Anspruch 1, wobei eine in der Maskierungsschicht (240) definierte Öffnung mit dem ersten Abschnitt des Replikationsmaterials (206) ausgerichtet ist.

5. Verfahren, umfassend:
Pressen einer Fläche eines Stempels (308) in einen ersten Abschnitt eines Replikationsmaterials (306), das auf einem Substrat (300) angeordnet ist, um zu bewirken, dass das Replikationsmaterial (306) eine vorbestimmte Charakteristik aufweist;
Aussetzen des ersten Abschnitts des Replikationsmaterials (306) gegenüber Beleuchtung, um den ersten Abschnitt des Replikationsmaterials (306) zu modifizieren; und
anschließendes Entfernen eines zweiten Abschnitts des Replikationsmaterials (306), der nicht der Beleuchtung ausgesetzt war, **dadurch gekennzeichnet, dass** das Substrat (300) eine Maskierungsschicht (350) auf einer zweiten Oberfläche (352) des Substrats (300) umfasst, wobei die zweite Oberfläche (352) einer Oberfläche gegenüberliegt, auf der das Replikationsmaterial (306) angeordnet ist,
wobei die Maskierungsschicht (350) den zweiten Abschnitt des Replikationsmaterials (306) vor der Beleuchtung abschirmt, wenn der erste Abschnitt des Replikationsmaterials (306) der Beleuchtung ausgesetzt wird,
wobei mindestens ein Abschnitt des Substrats (300) für die Beleuchtung durchlässig ist, und
wobei das Aussetzen des ersten Abschnitts des Replikationsmaterials (306) gegenüber der Beleuchtung Leiten der Beleuchtung durch das Substrat (300) umfasst.

6. Verfahren nach Anspruch 1, wobei das Entfernen des zweiten Abschnitts des Replikationsmaterials (306) Auflösen des zweiten Abschnitts des Replikationsmaterials unter Verwendung eines Lösungsmittels umfasst.

7. Verfahren nach Anspruch 6, wobei das Lösungsmittel den zweiten Abschnitt des Replikationsmaterials (306), der nicht der Beleuchtung ausgesetzt ist, relativ zu dem ersten Abschnitt des Replikationsmaterials, der der Beleuchtung ausgesetzt ist, selektiv auflöst oder wobei das Entfernen des zweiten Abschnitts des Replikationsmaterials Leiten des Lösungsmittels in Spalte zwischen dem Stempel (308) und dem Substrat (300) umfasst, während die Fläche des Stempels in Kontakt mit dem ersten Abschnitt des Replikationsmaterials gehalten wird.

8. Verfahren nach Anspruch 1, wobei die vorbestimmte Charakteristik eine Oberflächenstruktur des Replikationsmaterials (306) umfasst, wobei optional die Oberflächenstruktur eine optische Funktionalität bereitstellt.

9. Verfahren nach Anspruch 1, wobei die Beleuchtung ultraviolettes Licht umfasst.

10. Verfahren nach Anspruch 1, wobei der zweite Abschnitt des Replikationsmaterials (306) auf einem ersten Bereich einer Oberfläche des Substrats (300) angeordnet ist, wobei das Verfahren ferner Folgendes umfasst:
nach dem Entfernen des zweiten Abschnitts des Replikationsmaterials Zerteilen des Substrats durch den ersten Bereich.

11. Optische Vorrichtung (328), umfassend:
ein Substrat (300);
einen Abschnitt des Replikationsmaterials (306), der auf einer ersten Oberfläche des Substrats (300) angeordnet ist, wobei der Abschnitt des Replikationsmaterials (306) ein oder mehrere diffraktive optische Elemente bildet; und **gekennzeichnet durch**
eine Maskierungsschicht (350), die auf einer zweiten Oberfläche des Substrats (300) angeordnet ist, wobei die zweite Oberfläche der ersten Oberfläche gegenüberliegt, wobei die Maskierungsschicht (350) aus einem Material besteht, das die Durchlässigkeit von UV-Licht blockiert, wobei eine Seitenwand des Abschnitts des Replikationsmaterials (306) ein gerades Profil aufweist, und
wobei die Maskierungsschicht (350) eine Öffnung (354) definiert, die mit dem Abschnitt des Replikationsmaterials ausgerichtet ist.

12. Optische Vorrichtung (790), umfassend:
ein Substrat (700); und
ein Replikationsmaterial (792), das auf einer ersten Oberfläche (791) des Substrats (700) angeordnet ist, wobei das Replikationsmaterial ein oder mehrere diffraktive optische Elemente bildet; und **gekennzeichnet durch**
eine Maskierungsschicht (716), die auf einer zweiten Oberfläche des Substrats (700) angeordnet ist, wobei die zweite Oberfläche der ersten Oberfläche gegenüberliegt, wobei eine Seitenwand des Replikationsmaterials ein gerades Profil aufweist und in einem stumpfen Kontaktwinkel in Bezug auf die erste Oberfläche (791) des Substrats (700) geneigt ist.

13. Modul (818, 824, 830, 840), umfassend:
mindestens eine von einer lichtemittierenden Vorrichtung (810) oder einer lichtempfindlichen Vorrichtung (810); und
eine optische Vorrichtung nach einem der Ansprüche 11-12,
wobei die optische Vorrichtung dazu ausgelegt ist, (i) mit Licht zu interagieren, das durch die lichtemittierende Vorrichtung (810) erzeugt wird, oder (ii) mit Licht zu interagieren, das auf das Modul einfällt, so dass Licht, das durch die optische Vorrichtung durchtritt, durch die lichtempfindliche Vorrichtung (810) empfangen wird.

## Revendications

1. Procédé comprenant :
le pressage d'une face d'un tampon (208) dans une première partie d'un matériau de réplication (206) disposé sur un substrat (200), pour amener le matériau de réplication à présenter une caractéristique prédéterminée ;
l'exposition de la première partie du matériau de réplication (206) à un éclairage pour modifier la première partie du matériau de réplication ; et
le retrait ultérieur d'une seconde partie du matériau de réplication (206) qui n'a pas été exposée à l'éclairage, le tampon (208) comprenant une couche de masquage (240), la couche de masquage étant disposée sur une seconde face (242) du tampon, la seconde face étant opposée à la face qui est pressée dans la première partie du matériau de réplication (206), et la couche de masquage (240) protégeant la seconde partie du matériau de réplication (206) de l'éclairage lorsque la première partie du matériau de réplication (206) est exposée à l'éclairage.

2. Procédé selon la revendication 1, l'exposition de la première partie du matériau de réplication (206) à l'éclairage comprenant
l'exposition de la première partie du matériau de réplication à l'éclairage tandis que la face du tampon (208) est maintenue en contact avec la première partie du matériau de réplication.

3. Procédé selon la revendication 1, la couche de masquage (240) étant disposée sur une surface du tampon (208) faisant face au substrat (200).

4. Procédé selon la revendication 1, une ouverture définie dans la couche de masquage (240) étant alignée avec la première partie du matériau de réplication (206).

5. Procédé comprenant :
le pressage d'une face d'un tampon (308) dans une première partie d'un matériau de réplication (306) disposé sur un substrat (300), pour amener le matériau de réplication (306) à présenter une caractéristique prédéterminée ;
l'exposition de la première partie du matériau de réplication (306) à un éclairage, pour modifier la première partie du matériau de réplication (306) ; et
le retrait ultérieur d'une seconde partie du matériau de réplication (306) qui n'a pas été exposée à l'éclairage,
**caractérisé en ce que**
le substrat (300) comprend une couche de masquage (350) sur une seconde surface (352) du substrat (300), la seconde surface (352) étant opposée à une surface sur laquelle le matériau de réplication (306) est disposé,
la couche de masquage (350) protégeant la seconde partie du matériau de réplication (306) de l'éclairage lorsque la première partie du matériau de réplication (306) est exposée à l'éclairage,
au moins une partie du substrat (300) étant transparente à l'éclairage, et
l'exposition de la première partie du matériau de réplication (306) à l'éclairage comprenant le fait de diriger l'éclairage à travers le substrat (300).

6. Procédé selon la revendication 1, le retrait de la seconde partie du matériau de réplication (306) comprenant la dissolution de la seconde partie du matériau de réplication en utilisant un solvant.

7. Procédé selon la revendication 6, le solvant dissolvant sélectivement la seconde partie du matériau de réplication (306) qui n'est pas exposée à l'éclairage, par rapport à la première partie du matériau de réplication qui est exposée à l'éclairage, ou le retrait de la seconde partie du matériau de réplication comprenant le fait de diriger le solvant dans des espaces entre le tampon (308) et le substrat (300) tandis que la face du tampon est maintenue en contact avec la première partie du matériau de réplication.

8. Procédé selon la revendication 1, la caractéristique prédéterminée comprenant une structure de surface du matériau de réplication (306), éventuellement la structure de surface fournissant une fonctionnalité optique.

9. Procédé selon la revendication 1, l'éclairage comprenant de la lumière ultraviolette.

10. Procédé selon la revendication 1, la seconde partie du matériau de réplication (306) étant disposée sur une première zone d'une surface du substrat (300), le procédé comprenant en outre,
après le retrait de la seconde partie du matériau de réplication, le découpage du substrat à travers la première zone.

11. Dispositif optique (328) comprenant un substrat (300) ;
une partie de matériau de réplication (306) disposée sur une première surface du substrat (300), la partie de matériau de réplication (306) formant un ou plusieurs éléments optiques diffractifs ; et **caractérisé par**
une couche de masquage (350) disposée sur une seconde surface du substrat (300), la seconde surface étant opposée à la première surface, la couche de masquage (350) étant composée d'un matériau qui bloque la transmission de lumière UV,
une paroi latérale de la partie de matériau de réplication (306) ayant un profil droit, et
la couche de masquage (350) définissant une ouverture (354) alignée avec la partie de matériau de réplication.

12. Dispositif optique (790) comprenant un substrat (700) ; et
un matériau de réplication (792) disposé sur une première surface (791) du substrat (700), le matériau de réplication formant un ou plusieurs éléments optiques diffractifs ; et **caractérisé par**
une couche de masquage (716) disposée sur une seconde surface du substrat (700), la seconde surface étant opposée à la première surface,
une paroi latérale du matériau de réplication ayant un profil droit et étant inclinée selon un angle de contact obtus par rapport à la première surface (791) du substrat (700).

13. Module (818, 824, 830, 840) comprenant :
au moins l'un parmi un dispositif électroluminescent (810) ou un dispositif photosensible (810) ; et
un dispositif optique selon l'une quelconque des revendications 11 à 12,
le dispositif optique étant configuré (i) pour interagir avec de la lumière générée par le dispositif électroluminescent (810) ou (ii) pour interagir avec de la lumière incidente sur le module de telle sorte que de la lumière passant à travers le dispositif optique soit reçue par le dispositif photosensible (810).
